# EUROPEAN PATENT APPLICATION

(11) **EP 0 552 627 A1**
(43) Date of publication of application: **28.07.1993**
(21) Application number: 93100265.3
(22) Date of filing: 11.01.1993
(51) Int. Cl.: G11B 33/04, G11B 23/02

(54) **Device for the open storage of cases of storage and filing media in the form of tapes or disks**

(30) Priority: 21.01.1992 IT UD920005
(71) Applicant: EXPONENT ITALIA Srl, I-33028 Tolmezzo (UD) (IT)
(72) Inventor: Gamper, Steven, Atlanta, Georgia 30306 (US); Snoke, Phillip Jack, Atlanta, Georgia 30327 (US)
(74) Representative: Petraz, Gilberto Luigi

(57) **Abstract**

Device for the open storage of cases of storage and filing media in the form of tapes or disks and, more generally, for storage of rigid or semi-rigid or box-type or solid elements having a parallelepipedal conformation with a substantially rectangular plan in appropriate opposed slots in a first vertical plane perpendicular to the lengthwise axis of the device, the device comprising a base (11) and a case-holder slider (14), each of which lies on one single plane and has two ends, the case-holder slider (14) being capable of being moved and positioned on mating lengthwise guides (12-13) included respectively on the upper face of the base (11) and on the lower face of the case-holder slider (14), the guides (12-13) being mated by insertion of the slider (14) at either end of the base (11), the base (11) including at the sides of the slider (14) connecting elements (22) with upper (29) and lower (129) positioning and fixture means, at least the upper positioning and fixture means (29) cooperating laterally with a lodgement notch (28).

## Description

This invention concerns a device of an open storage type to store cases of storage and filing media in the form of tapes or disks, as set forth in the main claim.

To be more exact, the device of this invention is of an open type containing products filed in-sight and makes possible the filing of magnetic and/or optical storage media in the form of tapes or disks such as cassettes for audio or video apparatus, for instance, or, preferably, optical disks such as compact disks, CD ROM, CD WORM, etc.

These storage and filing media in the form of tapes or disks are of the type held in a rigid or substantially rigid protective case.

More generally, this invention has the purpose of storing rigid or semi-rigid cases or box-type or solid elements (such as albums or containers of photographs, stamps, etc.) in such a way that they can be readily found, checked, inserted or withdrawn.

The generic word "case" shall be understood hereinafter as covering all cases of this type including those which can be likened to those detailed above.

The state of the art includes devices to store storage and filing media in the form of tapes or disks; these devices consist of containers normally having a lid and including elements to retain each single case.

The containers employed for these purposes in the state of the art include a drawer able to slide lengthwise on guides and positioned within a container which surrounds the drawer on five sides.

When it is desired to use a required storage medium or, rather, when it is desired to take a given case, it is necessary to pull the drawer more or less wholly from the container so as to look for the case of the selected medium; the arrangement of the cases within the drawer is not advantageous, since the drawer cooperates with intermediate separators required to hold the cases but increasing the difficulties of the search and selection.

Moreover, these containers are not very practical if they have to be moved when it is necessary to select a plurality of media for the purposes of research, for instance.

Furthermore, they do not allow all the sides of the case to be checked and therefore make it necessary that the cases should always be stored (oriented) in the same way if it is desired to be able to select the required case by checking it only from above.

Besides, the containers of the state of the art convey the clear idea of an "office" and do not fit in well in dwellings or in meeting-places and, as they surround their contents, remove the harmonious and stimulating visual impact of multicoloured cassettes.

Next, the waste of materials required by the containers of the state of the art entails a financial problem.

The working period for assembly, the complexity of the moulds and the connected moulding operations also pose a problem.

All these technical shortcomings involve a great waste of energy as regards the excessive material required, the complex structure of the moulds and the manhours wasted.

These storage devices of the state of the art are therefore not easy to use, make complicated the work of checking, selecting, removing and re-inserting the cases and entail a great waste of time, materials and energy.

The present applicants have designed, tested and embodied this invention to overcome the shortcomings of the state of the art and to achieve further advantages.

This invention is set forth and characterized in the main claim, while the dependent claims describe variants of the idea of the main embodiment.

The purpose of this invention is to provide a device for in-sight storage, namely of an open type, which enables the cases to be properly positioned and held and assists the work of checking, selecting, removing, inserting and reinserting the cases.

The storage device of this invention takes up little room, does not weight much, is easy to store, carry and handle and can also be assembled by using auxiliary elements so that it can be fitted to other identical storage devices.

The storage device of this invention in its essential configuration consists of two parts, namely a base and a case-holder slider, which are available in their finished state directly at the outlet of the moulding operation.

Moreover, the essential parts of the storage device of this invention require a simple mould without undercuts, the two component parts of which move axially to each other.

The storage device according to the invention consists of a base having only one surface, along which a case-holder slider extending substantially along only one plane can slide lengthwise.

In relation to the base the case-holder slider can take up a first storage position and at least one usage position.

The invention arranges that the usage position of the case-holder slider comprises advantageously at least one second usage position partly withdrawn from the base and a third fully withdrawn usage position.

These usage positions make possible the normal operations on one or more cases in the second partly withdrawn usage position and the carrying of the case-holder slider together with the cases placed in it in the third fully withdrawn usage position.

The second partly withdrawn usage position of the case-holder slider in relation to the base is determined by retaining positioner means, which in this example can be resiliently rendered momentarily inoperative.

The conformation of the retaining positioner means provides for their inoperative condition to be actually desired by the user so that he can bring about the third fully withdrawn usage position of the case-holder slider.

The retaining positioner means are conformed in such a way that the re-insertion of the case-holder slider, in fact, makes the positioner means automatically and momentarily inoperative.

The retaining positioner means are positioned on the base along the lengthwise axis of the base in a position which is not central.

Lengthwise guides provided between the base and the case-holder slider can be employed advantageously by being mated together at either end of the base.

In this way the case-holder slider in relation to the base can, as desired, be withdrawn from one end or the other of the base.

The base includes guides for the sliding of the case-holder slider; these guides are positioned on the upper face of the base and include retaining extensions, which cooperate with underlying empty spaces for the sake of simplicity of the moulding operation.

The case-holder slider comprises at its front end an extension that contains at least one seating for insertion of identification and first selection means and can be used as a handle.

The case-holder slider includes in its lengthwise sides two facing, mating rows of slots to hold and position the cases.

These slots, while including undercuts, are produced in one single body in conjunction with the case-holder slider since they cooperate with underlying spaces which enable the mould to be extracted on its axis.

These slots are determined, in the lengthwise direction of the case-holder slider and along each lengthwise side of that slider, by containing fins.

The containing fins have a profile suitable to ensure a secure retention of the cases and at the same time a positioning of the cases suitable for their checking and identification.

The positioning includes two positions, namely a position tilted forwards and a position tilted backwards for easier reading of the faces of the cases.

To be more exact, the section of each of the containing fins includes, from below, a substantially overturned trapezoidal section, above which is advantageously placed a normal trapezoidal section.

According to a variant the profile of the containing fins is of an ovoid type.

A base tooth suitable to assist the positioning of the inserted case is placed between the two containing fins which define each side of the containing slot.

According to a variant an auxiliary element is provided that can be fitted in opposed pairs, which can be inserted and removed as required onto and from the fins and which protrude upwards therefrom and enable cassettes of a double width to be stored.

The base of the storage device according to the invention includes lengthwise guides which mate with lengthwise guides comprised in the case-holder slider; as we said above, the lengthwise guides on the base can be used at both ends of the base.

The lengthwise guides on the case-holder slider with their extension act also as elements for the fixture and positioning of the containing fins which form the slots to hold and position the cases.

Next, the base includes four multi-purpose seatings or connection elements positioned substantially at its four corners. These connection elements, which have a height conforming substantially to the thickness of the base, include lower and upper positioning and anchorage means; the connection elements include also a vertical through hole and, in an upper side, a notch to contain an auxiliary link for lateral connection.

The upper positioning means, depending on the lay-out to be obtained, cooperate with the lower part of auxiliary connecting uprights, which have at their ends a lateral notch since they have to be able to contain an auxiliary link.

The lower positioning means, depending on the lay-out to be obtained, may cooperate either with supporting elements or with the upper part of the connecting uprights. The supporting elements consist of a slip-resistant material.

For practical reasons the connecting uprights may be conformed with two equal, counterpart ends.

According to a variant covering elements may be provided.

According to a preferred embodiment the plan of the base has a flat extension with a substantially H-shaped conformation, which substantially contains two counterpart portions in relation to its lengthwise and transverse axes.

According to a preferred embodiment the case-holder slider has a substantially arcuate conformation at its two ends.

According to a variant it is possible to provide bases suitable to bear two sliders positioned side by side.

According to another variant it is possible to provide bases and relative sliders able to bear in the lengthwise direction two rows of cases positioned substantially side by side.

The attached figures are given as a non-restrictive example and show a preferred embodiment of the invention as follows:

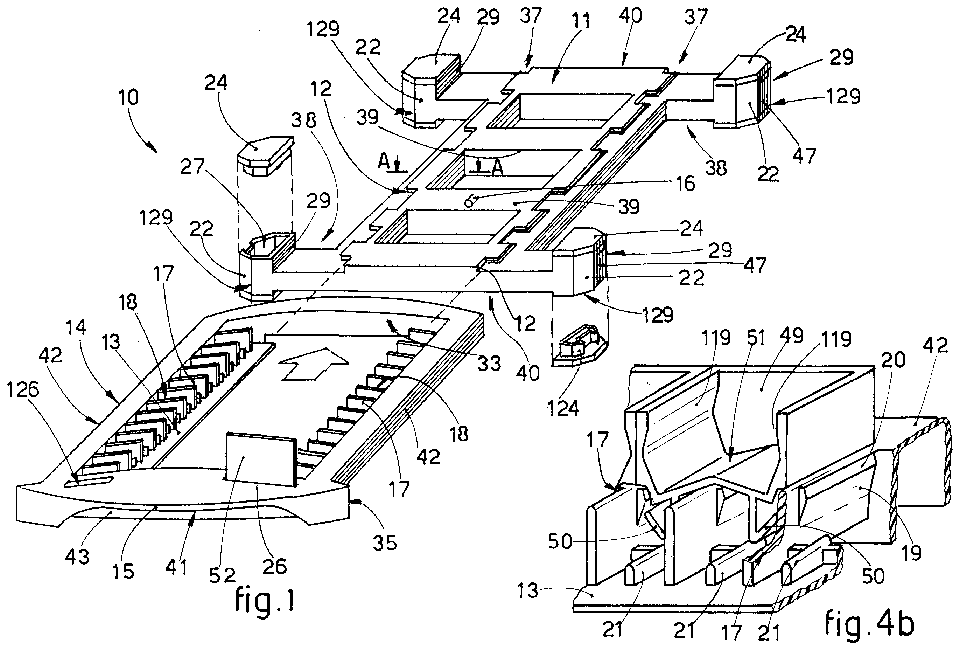

- Fig.1: shows a three-dimensional view of a device according to the invention, in which the case-holder slider has been wholly removed from the base;
- Fig.2: shows a detail 126 of Fig.1;
- Fig.3: is a small-scale front view of the storage device of Fig.1 with the case-holder slider detached from the base;
- Fig.4: is a three-dimensional view of containing fins positioned along one lengthwise side of the storage device of Fig.1;
- Fig.4a: shows a section A-A according to the arrows in Fig.1;
- Fig.4b: shows one of the two auxiliary elements which can be fitted for storage of cassettes having a double width;
- Fig.5: is a small-scale three-dimensional view of the lateral union of two of the storage devices of Fig.1;
- Fig.6: shows a connection system for the lateral union of Fig.5;
- Fig.7: is a knock-down view of the stacking of two storage devices according to Fig.1;
- Fig.8: shows a cross-section of two containing fins defining one side of a containing slot, the fins being shown in cooperation with a case;
- Fig.9: shows a section of the retaining positioner means;
- Fig.10: shows a section of the lateral and vertical connection of the connecting elements.

The reference number 10 in the figures indicates generically the device for in-sight storage of an open type according to this invention.

The storage device 10 according to the invention consists of a base 11 and a case-holder slider 14 free to slide lengthwise on the base 11.

The base 11 of the storage device 10 according to the invention includes lengthwise guides 12 which can mate with relative lengthwise guides 13 included in the case-holder slider 14.

The lengthwise guides 12 of the base 11 enable the case-holder slider 14 to be inserted and detached at both ends of the base 11.

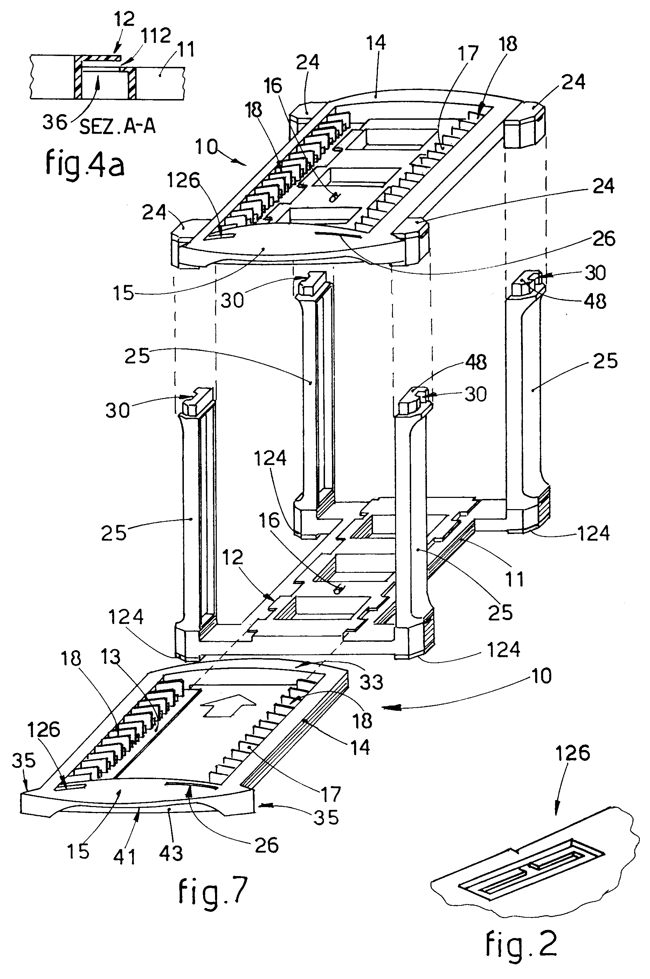

The lengthwise guides 12 of the base 11 (Fig.4a) include extensions 112 which leave an underlying space through which the guides 13 of the case-holder slider 14 can be threaded and slide.

The extensions 112 correspond with underlying spaces 36, which permit extraction of a mould without undercuts and also lighten the structure.

The base 11 is made as a frame with two parallel lengthwise bodies 37, two terminal transverse bodies 38 comprising at their ends connecting elements 22 for vertical and lateral connection and one or more intermediate transverse bodies 39. This conformation not only lightens the base 11 but also makes it solid and non-deformable at the same time.

The various bodies 37-38-39 are shaped as an overturned "U".

The base 11 includes retaining positioner means 16, which can be rendered resiliently and momentarily inoperative and are positioned on one or both of the intermediate transverse bodies 39.

Each of the retaining positioner means 16 determines a partly withdrawn position of the case-holder slider 14, and their lengthwise position together with the ability to position the case-holder slider 14 at either end 40 of the base 11 enables two different positions of the partly withdrawn case-holder slider 14 to be obtained.

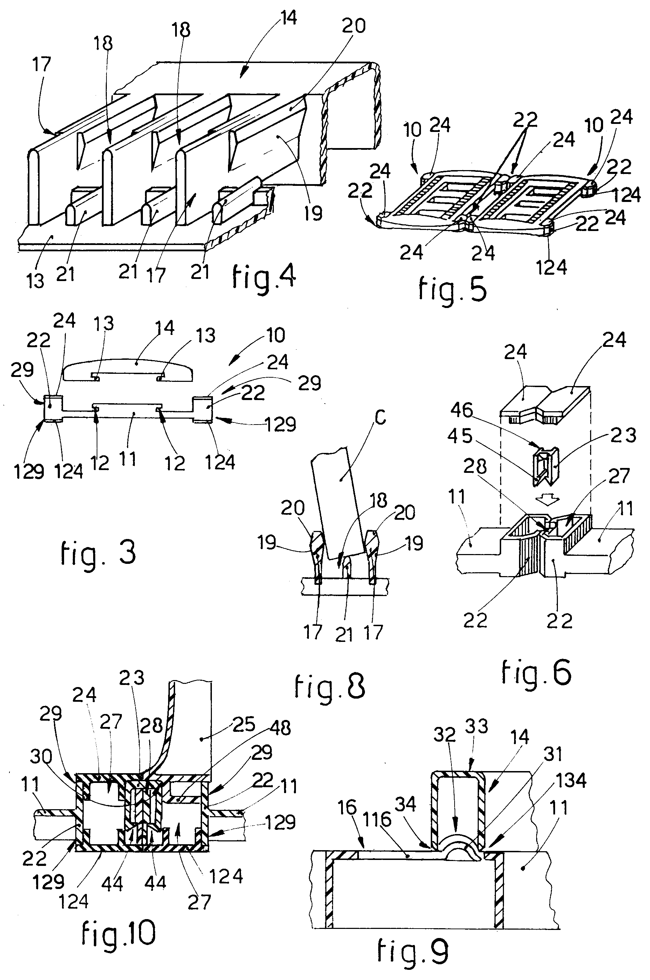

Fig.9 shows the retaining positioner means 16, which possesses a body 116 able to position itself resiliently and anchored cantilever-wise to the base 11; this body 116 bears at one end a ridge 31, which cooperates with a mating groove 32 included in the rear end 33 of the case-holder slider 14. When the ridge 31 enters resiliently into the mating groove 32, the case-holder slider 14 is positioned in relation to the base 11, thus determining its partly withdrawn position.

A possible joint 34 at the outer edge of a beam 33 acting as the rear end of the slider 14 assists insertion, while an edge 134 facilitates positioning.

Lengthwise disengagement of the base 11 from the case-holder slider 14 is achieved with a thrust or pull exerted on the slider 14, which by cooperation of the mating groove 32 with the ridge 31 constrains the end of the retaining positioner means 16 to be retracted below the sliding surface, thus freeing the case-holder slider 14.

When the case-holder slider 14 has been displaced from its partly withdrawn position, the retaining positioner means 16 takes up its natural position once more.

The case-holder slider 14 includes at its front end an extension 15 containing in its upper side at least one seating 26 for insertion of identification and first selection means 52. The extension 15 owing to its frontal conformation 41 performs also the task of a handle.

In this case a second seating 126 is included in cooperation with the extension 15 and comprises fixture elements to enable mating identification and/or rough selection means to be inserted and clamped.

At least one abutment element 35 is included in cooperation with the front end of the case-holder slider 14 and in this example is positioned laterally to determine the closed lengthwise position of the slider 14. In this case the abutment elements 35 cooperate with the front of the vertical and lateral connecting elements 22.

The case-holder slider 14 comprises two lengthwise cooperating and facing rows of slots 18 to hold and position the cases C.

The case-holder slider 14 is conformed ring-wise with a rectangular plan and with its periphery formed with beams shaped as an overturned "U". It includes two lengthwise beams 42, one front beam 43 and one rear beam 33. The front beam 43 constitutes the front end and includes the extension 15, whereas the rear beam 33 forms the rear end.

The slots 18 are defined by containing fins 17 along the length of the case-holder slider 14.

The containing fins 17 have a section which, starting from their bottom, includes a first overturned trapezoidal section 19, on top of which in this case is a normal trapezoidal section 20; the sides of the trapezoids 19-20 form supports for the faces of the case C.

A base projection 21 is placed between each two containing fins 17 defining each containing slot 18 and is suitable to facilitate the positioning and rotation of the case C positioned in the slot 18.

The containing fins 17 and base projection 21 (see Figs.4 and 8) cooperate with an underlying space which makes possible the extraction of the mould without undercuts and, at the same time, a saving of material.

Fig.4b shows an auxiliary element 49 which has the purpose of holding a case having a double width (thickness). This auxiliary element 49 is clamped with teeth 50 to the sides of the the overturned trapezoids 19 and cooperates with the upper part of the lengthwise beams 42 and of the containing fins 17.

This auxiliary element 49 too includes lateral supporting surfaces 119 and lower supporting surfaces 51.

The base 11 comprises connecting elements 22 positioned in this case at the four corners of the base 11 and in relation to the terminal transverse bodies 38. These connecting elements 22 are empty in the vertical direction, extend above the terminal transverse bodies 38 and include upper 29 and lower 129 positioning and fixture means.

In this case the connecting elements 22 contain a vertical through hole 27, which defines the upper and lower positioning and fixture means 29-129, and an upper notch 28 to lodge an auxiliary link 23; they also include a portion 44 of reduced thickness which cooperates with anchorage teeth 45 of the auxiliary link 23.

This auxiliary link 23 connects laterally and aligns two bases 11 and includes lateral bevelled portions 46 to assist extraction of the link 23, for example with the point of a screwdriver.

According to a variant the lower positioning and fixture means 129 too may include a lodgement notch 28.

The lodgement notches 28 are located on lateral faces 47 of the connecting elements 22, that is to say, on the faces which rest against each other when two bases 11 are aligned.

The upper positioning and fixture means 29 may cooperate either with upper covering elements 24 or with an end 48 of auxiliary connecting uprights 25 (see also Fig.7).

The covering elements 24 can act also as supporting feet and consist advantageously of a non-slip material, which in this case is rubber.

The auxiliary connecting uprights 25 have two identical counterpart ends 48 and have a substantially U-shaped cross-section in this example.

The auxiliary connecting uprights 25 contain in their ends 48 a lateral notch 30 to hold the auxiliary link 23 (see also Fig.10). The upper covering elements 24 too contain an analogous lateral notch 30.

The lower positioning and fixture means 129 can cooperate either with lower covering elements 124 or with the end 48 of the auxiliary connecting uprights 25 (see also Fig.7).

In this case too the lower covering elements 124 include a lateral notch 30 to hold the auxiliary link 23 (see Fig.10).

The auxiliary connecting uprights 25 have the purpose of creating a plurality of layers of bases 11. It is possible to create any desired three-dimensional lay-out by using the auxiliary links 23 and the auxiliary connecting uprights 25.

The example shown has a case C with its vertical sides and its base forming substantial right angles.

It forms part of the spirit of the invention to arrange that the containing slots 18 may be made suitable for cases C having a circular plan or another desired shape.

## Claims

1. Device for the open storage of cases of storage and filing media in the form of tapes or disks and, more generally, for storage of rigid or semi-rigid or box-type or solid elements having a parallelepipedal conformation with a substantially rectangular plan in appropriate opposed slots in a first vertical plane perpendicular to the lengthwise axis of the device, the device being characterized in that it comprises a base (11) and a case-holder slider (14), each of which lies on one single plane and has two ends, the case-holder slider (14) being capable of being moved and positioned on mating lengthwise guides (12-13) included respectively on the upper face of the base (11) and on the lower face of the case-holder slider (14), the guides (12-13) being mated by insertion of the slider (14) at either end of the base (11), the base (11) including at the sides of the slider (14) connecting elements (22) with upper (29) and lower (129) positioning and fixture means, at least the upper positioning and fixture means (29) cooperating laterally with a lodgement notch (28).

2. Device as in Claim 1, in which the base (11) comprises two parallel lengthwise bodies (37) bearing the guides (12) on their upper surface, two terminal transverse bodies (38) defining the ends (40) of the base (11) and including the connecting elements (22), and at least one intermediate transverse body (39), which comprises a resilient retaining positioner means (16) that cooperates with a mating groove (32) in the case-holder slider (14).

3. Device as in Claim 1 or 2, in which the case-holder slider (14) is conformed ring-wise with a rectangular plan and with two lengthwise beams (42), one front beam (43) and one rear beam (33), the lengthwise beams (42) including at their sides the guides (13) and opposed slots (18) to hold and position cases, the elements which define the slots (18) connecting the lengthwise beams (42) laterally to the respective guides (13).

4. Device as in any claim hereinbefore, in which the slots (18) are defined by containing fins (17) including lateral trapezoid means (19-20) able to hold the cases in two positions, the containing fins (17) forming part of the same body as the case-holder slider (14).

5. Device as in any claim hereinbefore, in which a base projection (21) fixed to the guide (13) is included between each containing fin (17) and the next containing fin (17).

6. Device as in any claim hereinbefore, in which the containing fins (17) jut out sideways from their respective lengthwise beam (42) and extend partly on their respective guide (13) but leave free a space for cooperation with the mating guide (12) on the base (11).

7. Device as in any claim hereinbefore, in which the containing fins (17) cooperate at their upper side with a removable auxiliary element (49) which can hold cases having a double width.

8. Device as in any claim hereinbefore, in which the case-holder slider (14) includes in the lower side of its rear beam (33) a groove (32) which mates with a ridge (31) of the retaining positioner means (16)

9. Device as in any claim hereinbefore, in which the case-holder slider (14) includes at its front end an extension (15) which contains in its upper side at least one seating (26-126) for first identification means (52) and in its lower side a conformation for use as a handle (41).

10. Device as in any claim hereinbefore, in which the case-holder slider (14) comprises at its front abutment elements (35) that cooperate with the front part of the connecting elements (22).
